# EUROPEAN PATENT SPECIFICATION

(11) **EP 1 221 793 B1**
(45) Date of publication and mention of the grant of the patent: **11.04.2007**
(21) Application number: 02250062.3
(22) Date of filing: 07.01.2002
(51) Int. Cl.: H04L 25/02, H04L 25/06, H04L 27/26, H04L 1/00

(54) **Channel estimation and data decisions for multicarrier reception**
Kanalschätzung und Datenentscheidung für Mehrträgerempfang
Estimation de canal et décisions de données pour la réception multiporteuse

(30) Priority: 05.01.2001 GB 0100275
(43) Date of publication of application: 10.07.2002
(73) Proprietor: BRITISH BROADCASTING CORPORATION, London W1A 1AA (GB)
(72) Inventor: Robinson, Adrian Paul, c/o British Broadcast Corp, Tadworth, Surrey KT20 6NP (GB)
(74) Representative: Abnett, Richard Charles

(56) References cited:
- EP-A- 0 991 239
- EP-A- 1 035 692
- US-A- 5 687 198

## Description

### Background of the Invention

This invention relates to a method and apparatus for determining channel state information from an OFDM (orthogonal frequency-division multiplex) signal received over a channel, and to a method and apparatus for determining values encoded by the received signal, the values being selected from a plurality of possible values.

The invention is described in the context of the reception of so-called DVB-T signals, that is signals in accordance with the Digital Video Broadcasting standard for Terrestrial television, as defined in European Telecommunication Standard ETS 300 744. The invention is not however limited to use with such signals, but can be used with other many-carrier transmission systems which use soft-decision decoding and require a channel state indication to be obtained for each carrier.

The classical approach to channel state measurement has in this context has been to make use of the frequency response characteristic as determined in a channel equaliser at the receiver. This operates by detecting the strength of scattered pilots or reference carriers in the many-carrier frequency multiplex, and interpolating a value for each data carrier. If there is no frequency selective interference, then the noise on all the carriers is the same. The inverse of the frequency response can then be regarded as a measurement of channel state, the wanted-to-unwanted signal power ratio. This is however a relatively indirect way of obtaining a channel state measurement for each carrier.

Our European Patent Application EP-A-0 991 239A describes a channel state measurement method which directly measures the difference between received values and the nearest quantised constellation point. This in principle produces an improved measurement of channel state for each carrier.

However, we have found that in certain circumstances the system of our earlier patent application produces less satisfactory results. This is particularly the case when the receiver is receiving two signals at approximately equal power, and where the receiver is mobile so that one of the received signals has suffered a Doppler frequency shift. Two transmitted signals may be received from two transmitters (OFDM is designed to enable the use of a single-frequency network), or there may be so-called 0dB echoes, that is reflections at a power which is not reduced relative to the direct signal. In the particular situation of two such signals and a frequency shift, the improvement otherwise seen with the system of our earlier patent application is not obtained.

Reference may be made to United States Patent US-A-5,687,164 which describes the use of a Viterbi decoder to decode a QAM signal. International Patent Application WO97/13378 describes obtaining channel state information from QPSK modulated symbols. United States Patent US-A-5,636,253 describes selecting for each symbol the nearest of the QAM points and calculating the difference from it, and multiplying it with a weighting coefficient. International Patent Application WO92/22162 describes a QAM system in which the constellation is modified in accordance with channel quality. United States Patent US-A-5,134,635 describes a convolutional decoder which assigns bit metrics to at least one bit of a symbol, and uses soft-decision Viterbi decoding with channel state information. United States Patent US-A-4,630,305 describes a noise suppression system for use with high ambient noise which estimates channel energy and controls channel gain in dependence thereon.

United States Patent US-A-5,274,629 describes the use of reference carriers (pilots) in an OFDM transmission, and at a receiver using the channel frequency response obtained by measuring the reference carriers to ensure coherent demodulation of the data carriers.

International Patent Application WO97/25780 describes a single-carrier receiver which estimates channel response; this is a complex number (H). In Application WO97/25780, the receiver demodulates a transmitted signal and makes an initial estimate of the channel response from pilots in the transmission. The receiver makes a hard initial decision as to what the transmitted data was, and on the basis of this the received data symbols have their phase modulation removed so that their phases are aligned with the pilot phases. The samples having a vector projection closest to the average are retained and used to generate a new channel response estimate, thereby discarding 'outliers' or incorrect assignments. A subsequent further improved channel response estimate is then obtained.

### Summary of the Invention

The invention in its various aspects is defined in the independent claims below, to which reference should now be made. Advantageous features are set forth in the appendant claims.

A preferred embodiment of the invention is described below with reference to the drawings. The preferred embodiment takes the form of a DVB-T receiver, in which a channel equaliser generates an indirect measure of transmission channel state from scattered pilots transmitted in the signal, and interpolates from these to give channel state measurement values for all the carriers. A direct measure of transmission channel state is separately obtained from the differences between the input values and hard quantised values obtained from them, filtered in a symbol recursive filter. This can be termed 'cloud size'. Each channel state measure is applied to a control law circuit to provide a control signal. The control signal indicating the poorer quality is selected to provide channel state measurement used for control. This control signal controls the confidence-level discrimination levels of soft-decision quantisers in the main signal path.

We have appreciated that the strengths and weaknesses of the direct measurement method, using differences between the input values and hard quantised values obtained from them, and of the indirect method, using interpolation from scattered pilots, are complementary, and in each case the weakness is in the direction of being too optimistic, that is indicating that the transmission channel state is better than is in fact the case. The invention combines the measurements in a non-linear way so as to use the respective strengths of the two methods to avoid their weaknesses.

### Brief Description of the Drawings

The invention will now be described in more detail, by way of example, with reference to the accompanying drawings, in which:
**Figure 1** is a schematic block diagram of a known DVB-T transmitter;
**Figure 2** shows the construction of the punctured convolutional coder forming the inner coder of the transmitter of Figure 1;
**Figure 3** is a schematic block diagram of a typical DVB-T receiver design;
**Figure 4** shows the metric assignment and demapping circuit of the receiver of Figure 3 when constructed in accordance with our European Patent Application EP-A-0 991 294A;
**Figure 5** shows the channel equaliser and the metric assignment and demapping circuit of the receiver of Figure 3 when constructed in accordance with another prior proposal using an indirect method of channel state measurement; and
**Figure 6** shows the channel equaliser and the metric assignment and demapping circuit of the receiver of Figure 3 when constructed in accordance with the preferred embodiment of the present invention.

### Detailed Description of the Preferred Embodiment

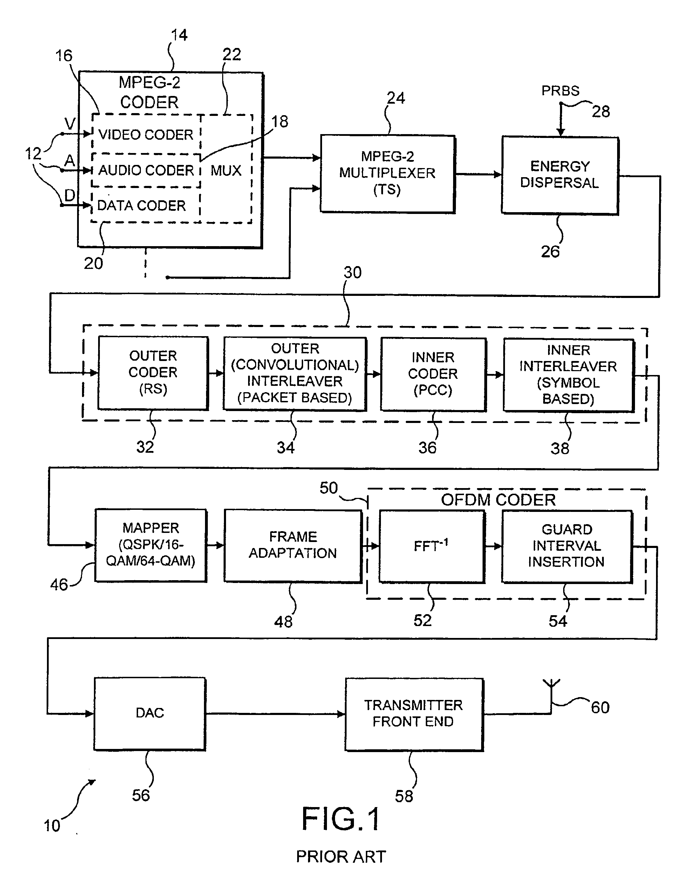

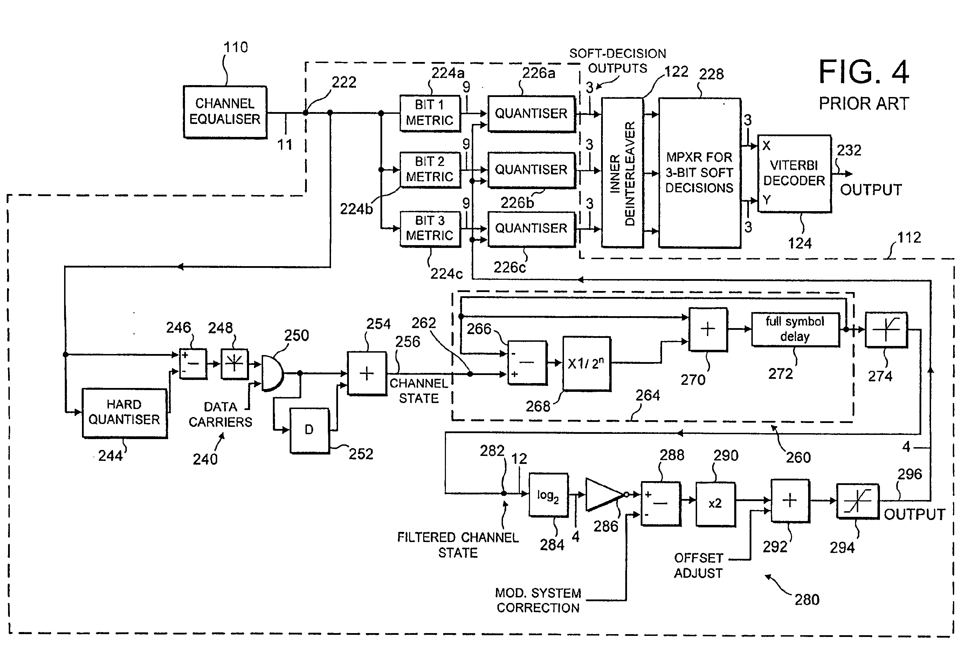

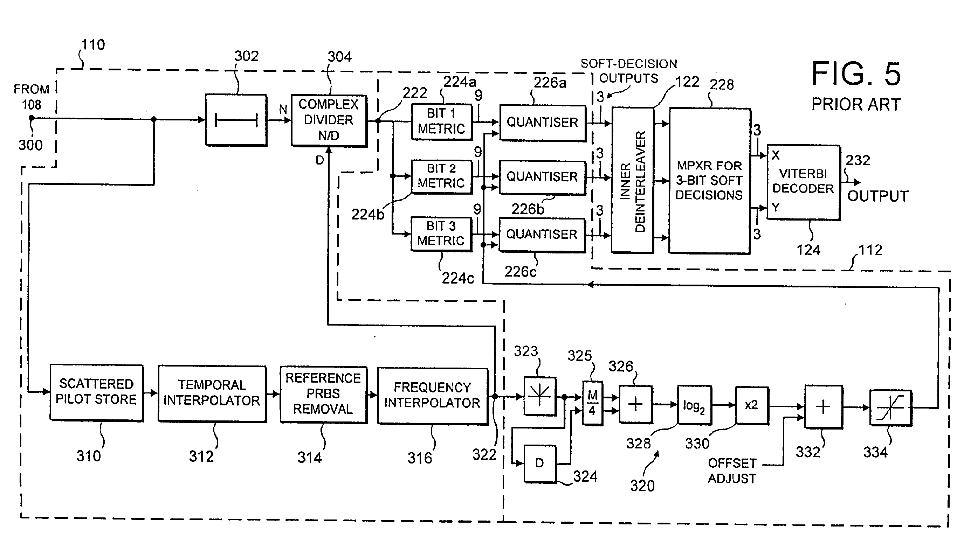

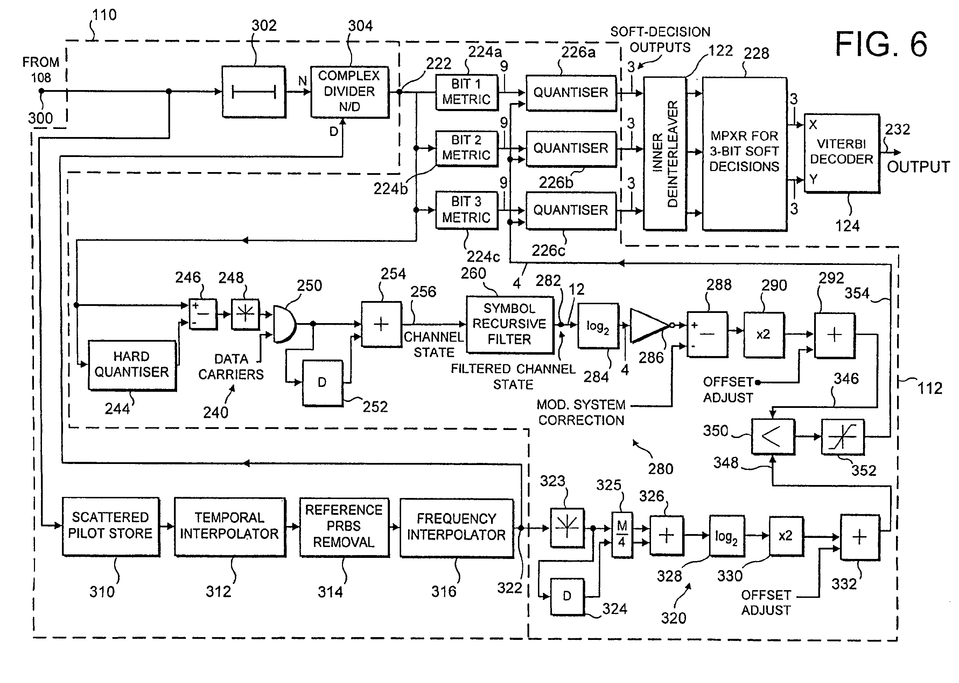

The preferred embodiment is implemented as a DVB-T receiver. To enable an understanding of the present invention a description of the principles of a DVB-T transmitter and receiver are first described with reference to Figures 1 to 3. Channel state measurement systems for use in DVB-T receivers are then described; first the direct system of our European Patent Application EP-A-0 991 294A, with reference to Figure 4, and then an indirect system, with reference to Figure 5. Finally a receiver embodying the invention is described with reference to Figure 6; to avoid repetition, parts of the circuit of Figure 6 which have previously been described with reference to Figures 4 and 5 are not again described in detail.

### DVB-T Transmitter

Figure 1 is a block diagram of a transmitter 10 for use in the Digital Video Broadcasting standard for Terrestrial television (DVB-T) as defined in European Telecommunication Standard ETS 300 744 (hereinafter "the standard"). Reference should be made to that standard for further details; the following description is by way of a summary for the purpose of illustrating the present invention.

The transmitter receives video (V), audio (A), and data (D) signals from appropriate signal sources via inputs 12 and these are applied to an MPEG-2 coder 14. The MPEG-2 coder includes a separate video coder 16, audio coder 18 and data coder 20, which provide packetised elementary streams which are multiplexed in a programme multiplexer 22. Signals are obtained in this way for different programmes, that is to say broadcast channels, and these are multiplexed into a transport stream in a transport stream multiplexer 24. Although considered as part of the transmitter for the purposes of this specification, the components up to the multiplexer 24 will normally be located at the studio complex. The output of the transport stream multiplexer 24 consists of packets of 188 bytes and is applied to a randomiser 26 for energy dispersal, where the signal is combined with the output of a pseudo-random binary sequence (PRBS) generator received at a terminal 28. The randomiser more evenly distributes the energy within the RF (radio frequency) channel. The MPEG-2 coding and multiplexing and the randomising are not further described as they are not relevant to an understanding of the present invention. For further details of MPEG-2 reference may be made to standard ISO/IEC 13818 "Coding of moving pictures and associated audio". An introductory discussion may be found, for example, in "Digital Television" by Hervé Benoit, 1997, ISBN 0340691905.

The signal is now applied to a channel coding section 30 which is generally known as the forward error corrector (FEC) and which comprises four main components, namely:
an outer coder 32,
an outer interleaver 34,
an inner coder 36, and
an inner interleaver 38.

These will now be described. The two coding stages 32,36 provide a degree of redundancy to enable error correction at the receiver. The two interleaving stages 34,38 are necessary precursors for corresponding deinterleavers at a receiver so as to break up bursts of errors so as to allow the error correction to be more effective.

The outer coder 32 is a Reed-Solomon (RS) coder, which processes the signal in packets of 188 bytes and adds to each packet 16 error protection bytes. This allows the correction of up to 8 random erroneous bytes in a received word of 204 bytes. This is known as a (204, 188, t=8) Reed-Solomon code. This is achieved as a shortened code using an RS (255, 239, t=8) encoder but with the first 51 bytes being set to zero.

The outer interleaver 34 effects a Forney convolutional interleaving operation on a byte-wise basis within the packet structure, and spreads burst errors introduced by the transmission channel over a longer time so they are less likely to exceed the capacity of the RS coding. After the interleaver, the nth byte of a packet remains in the nth byte position, but it will usually be in a different packet. The bytes are spread successively over 12 packets, so the first byte of an input packet goes into the first output packet, the second byte of the input packet is transmitted in the second output packet, and so on up to the twelfth. The next byte goes into the first packet again, and every twelfth byte after that. As a packet contains 204 bytes, and 204 = 12 x 17, after the outer interleaving a packet contains 17 bytes that come from the same original packet.

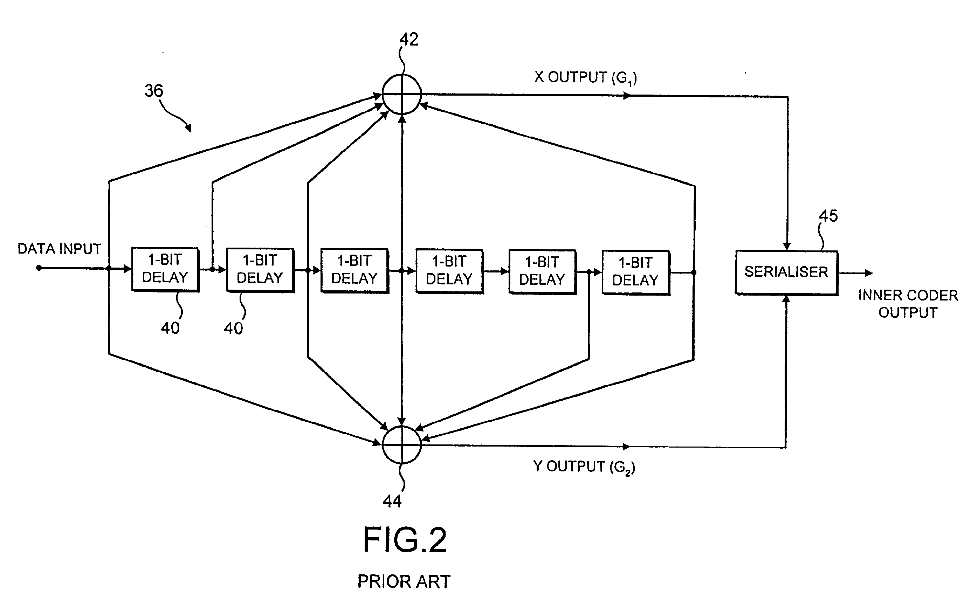

The inner coder 36 is a punctured convolutional coder (PCC). The system allows for a range of punctured convolutional codes, based on a mother convolutional code of rate 1/2 with 64 states. Figure 2 is a block diagram illustrating a hardware implementation of the convolutional coder. The data input is applied to a series of six one-bit delays 40 and the seven resultant bits which are available are combined in different ways by two modulo-2 adders 42,44, as shown. These adders provide the output of the inner coder in the form of an X or G₁ output and a Y or G₂ output, the letter G here standing for the generator sum. The X and Y outputs are combined into a single bit stream by a serialiser 45.

The puncturing is achieved by discarding selected ones of the X and Y outputs in accordance with one of several possible puncturing patterns. Without puncturing, each input bit gives rise to two output bits. With puncturing one of the following is achieved:
Every 2 input bits give 3 output bits
Every 3 input bits give 4 output bits
Every 5 input bits give 6 output bits
Every 7 input bits give 8 output bits
This is set out in Table 2 in the standard; the punctured code rates are represented in the form 2/3, 3/4, 5/6 and 7/8. The puncturing takes place in the serialiser 45.

Returning to Figure 1, the inner interleaver 38 in accordance with the standard is implemented as a two-stage process, namely bit-wise interleaving followed by symbol interleaving. Both are block based. First, however, the incoming bit stream is divided into 2, 4 or 6 sub-streams, depending on whether QPSK (quadrature phase shift keying), 16-QAM (quadrature amplitude modulation), or 64-QAM is to be used, as described below. Each sub-stream is separately bit interleaved and all the streams are then symbol interleaved.

The bit interleaver uses a bit interleaving block size which corresponds to one-twelfth of an OFDM symbol of useful data in the 2k mode and 1/48 of an OFDM symbol in the 8k mode. These two modes are explained below.

The symbol interleaver maps the 2, 4 or 6-bit words onto 1512 or 6048 active carriers, depending on whether the 2k or 8k mode is in use. The symbol interleaver acts so as to shuffle groups of 2, 4 or 6 bits around within the symbol. This it does by writing the symbol into memory and reading out the groups of 2, 4 or 6 bits in a different and permuted order compared with the order in which they were written into the memory.

Finally the groups of 2, 4 or 6 bits are applied to a mapper 46 which quadrature modulates the bits according to QPSK, 16-QAM or 64-QAM modulation, depending on the mode in use. (QPSK may also be represented as 4-QAM.) The constellations are shown in Figure 9 of the standard. It will be appreciated that this requires 1, 2 or 3 bits on the X axis and 1, 2 or 3 bits on the Y axis. Thus while reference has been made to 2, 4 or 6 bits in the shuffling process, in fact the shuffling is applied to 1, 2 or 3 bits in the real part and 1, 2 or 3 bits in the imaginary part.

So-called hierarchical transmission can be used in which a high-priority stream and a low-priority stream are separately modulated.

The signal is now organized into frames in a frame adapter 48 and applied to an OFDM (orthogonal frequency-division multiplexer) coder 50. Each frame consists of 68 OFDM symbols. Each symbol is constituted by 1705 carriers in 2k mode or 6817 carriers in 8k mode. Using the 2k mode as an example, instead of transmitting 1705 bits sequentially on a single carrier, they are assembled and transmitted simultaneously on 1705 carriers. This means that each bit can be transmitted for much longer, which, together with the use of a guard interval, avoids the effect of multipath interference and, at least in 8k mode, allows the creation of a single-frequency network.

The duration of each symbol, the symbol period, is made up of an active or useful symbol period, and the guard interval. The spacing between adjacent carriers is the reciprocal of the active symbol period, thus satisfying the condition for orthogonality between the carriers. The guard interval is a predefined fraction of the active symbol period, and contains a cyclic continuation of the active symbol.

The predefined fractions are 1/4, 1/8, 1/16 and 1/32. The total symbol duration is of the order of 250 µs for the 2k mode and 1 ms for the 8k mode.

The frame adapter 48 also operates to insert into the signal pilots, some of which can be used at the receiver to determine reference amplitudes and phases for the received signals. The pilots include scattered pilots scattered amongst the 1705 or 6817 transmitted carriers as well as continual fixed pilots. The pilots are modulated in accordance with a PRBS sequence. Some other carriers are used to signal parameters indicating the channel coding and modulation schemes that are being used, to provide synchronization, and so on.

The OFDM coder 50 consists essentially of an inverse fast Fourier transform (FFT) circuit 52, and a guard interval inserter circuit 54. The construction of the OFDM coder will be known to those skilled in the art.

Reference is made to British Broadcasting Corporation Research and Development Report BBC RD 1996/8, P. Shelswell, "The COFDM Modulation System" with regard to OFDM generally, and to a paper by Stott, J.H., 1997, "Explaining some of the Magic of COFDM", Proceedings of the 20th International Symposium, Montreux 1997, pages 341 to 350, which describes how the various components of the forward error corrector co-operate with the OFDM coder to provide a very advantageous coding system.

Finally, the signal is applied to a digital to analogue converter 56 and thence to a transmitter 'front end' 58, including the transmitter power amplifier, and is radiated at radio frequency from an antenna 60.

### DVB-T Receiver

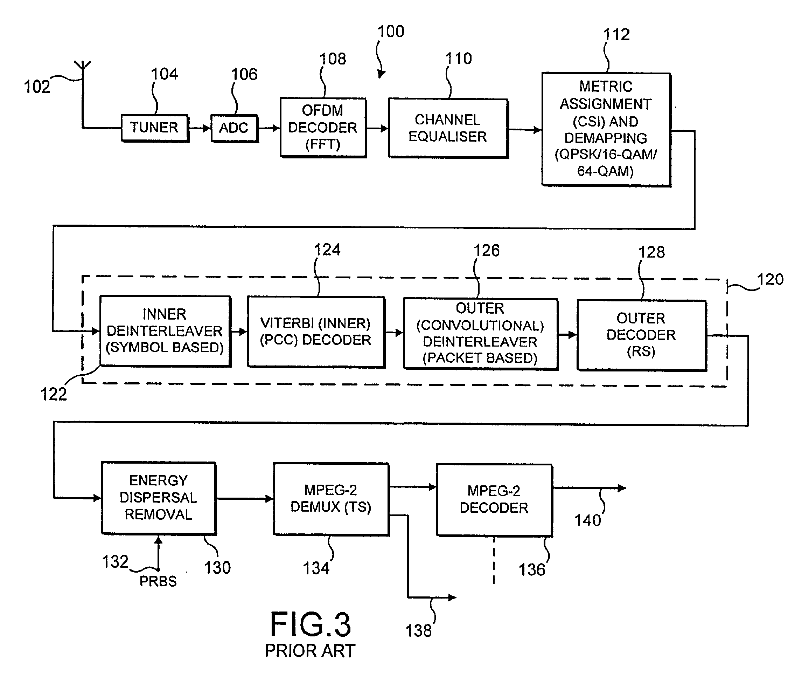

The receiver construction is not specified by the standard ETS 300 744, but typically includes components corresponding to those in the transmitter but in reverse order. A generalised DVB-T receiver 100 is illustrated in simplified form in the block diagram of Figure 3, with some elements which are not of particular relevance to the present invention omitted. Reference may also be made to European Patent Application EP-A-0 877 526 for a description of an integrated circuit forming the main component of a receiver.

In the receiver 100 an analogue RF signal is received by an antenna 102 and applied to a tuner or down-converter 104, constituting the receiver front end, where it is reduced to baseband. The signal from the tuner is applied to an analogue-to-digital converter 106, the output of which forms the input to an OFDM decoder 108. The main constituent of the OFDM decoder is a fast Fourier transform (FFT) circuit, to which the FFT in the transmitter is the inverse. The FFT receives the many-carrier transmitted signal with one bit per symbol period on each carrier and converts this back into a single signal with many bits per symbol period. The existence of the guard interval, coupled with the relatively low symbol rate compared with the total bit rate being transmitted, renders the decoder highly resistant to multipath distortion or interference.

Appropriate synchronisation is provided, as is well-known to those skilled in the art. In particular, a synchronising circuit will receive inputs from the ADC 106 and the FFT 108, and will provide outputs to the FFT and, for automatic frequency control, to the tuner 104.

The output of the OFDM decoder 108 is then applied to a channel equalizer 110. This estimates the channel frequency response, then divides the input signal by the estimated response, to output an equalised constellation.

Now the signal is applied to a circuit 112 which combines the functions of measurement of channel state, and demodulation or demapping of the quadrature modulated constellations. The demodulation converts the signal back from QPSK, 16-QAM, or 64-QAM to a simple data stream, by selecting the nominal constellation points which are nearest to the actual constellation points received; these may have suffered some distortion in the transmission channel. At the same time the circuit 112 estimates the likelihood or level of certainty that the decoded constellation points do in fact represent the points they have been interpreted as. As a result a likelihood or confidence value is assigned to each of the decoded bits.

The output of the metric assignment and demapping circuit 112 is now applied to an error corrector block 120 which makes use of the redundancy which was introduced in the forward error corrector 30 in the transmitter. The error corrector block 120 comprises:
an inner deinterleaver 122,
an inner decoder 124, in the form of a soft-decision Viterbi decoder,
an outer deinterleaver 126, and
an outer decoder 128.

The inner deinterleaver 122 provides symbol-based deinterleaving which simply reverses that which was introduced in the inner interleaver 38 in the transmitter. This tends to spread bursts of errors so that they are better corrected by the Viterbi decoder 124. The inner deinterleaver first shuffles the groups of 2, 4 or 6 real and imaginary bits within a symbol (that is, 1, 2 or 3 of each), and then provides bit-wise deinterleaving on a block-based basis. The bit deinterleaving is applied separately to the 2, 4 or 6 sub-streams.

Now the signal is applied to the Viterbi decoder 124. The Viterbi decoder acts as a decoder for the coding introduced by the punctured convolutional coder 36 at the transmitter. The puncturing (when used) has caused the elimination of certain of the transmitted bits, and these are replaced by codes indicating a mid-value between zero and one at the input to the Viterbi decoder. This will be done by giving the bit a minimum likelihood value. If there is no minimum likelihood code exactly between zero and one, then the added bits are alternately given the minimum values for zero and for one. The Viterbi decoder makes use of the soft-decision inputs, that is inputs which represent a likelihood of a zero or of a one, and uses them together with historical information to determine whether the input to the convolutional encoder is more likely to have been a zero or a one.

The signal from the Viterbi decoder is now applied to the outer deinterleaver 126 which is a convolutional deinterleaver operating byte-wise within each packet. The deinterleaver 126 reverses the operation of the outer interleaver 34 at the transmitter. Again this serves to spread any burst errors so that the outer coder 128 can better cope with them.

The outer decoder 128 is a Reed-Solomon decoder, itself well-known, which generates 188-byte packets from the 204-byte packets received. Up to eight random errors per packet can be corrected.

From the Reed-Solomon outer decoder 128 which forms the final element of the error corrector block 120, the signal is applied to an energy dispersal removal stage 130. This receives a pseudo-random binary sequence at an input 132 and uses this to reverse the action of the energy dispersal randomiser 26 at the transmitter. From here the signal passes to an MPEG-2 transport stream demultiplexer 134. A given programme is applied to an MPEG-2 decoder 136; other programmes are separated out as at 138. The MPEG-2 decoder 136 separately decodes the video, audio and data to provide elementary streams at an output 140 corresponding to those at the inputs 12 on Figure 1.

### Channel State Information in DVB-T Receivers

We have previously proposed using channel state information in a DVB-T receiver in the manner described in our European Patent Application EP 0 991 239A. That application describes a system in which a measurement of channel state is obtained for each carrier of a COFDM signal and is used to vary the discrimination levels of the soft-decision quantiser which feeds the Viterbi decoder. The channel state information is obtained from, say, a 64-QAM signal by quantising the input with a hard-decision quantiser and obtaining the modulus of the difference between the quantised and unquantised signal. The channel state information is applied through a symbol-delay recursive filter to a control circuit. The output of the control circuit directly controls the soft-decision quantisers by varying their discrimination levels which they use in determining the likelihood or confidence values.

Channel state is ideally a measure of C/(N+I), where C is the power of the wanted signal, N is the noise power, and I is the power of the unwanted interference. Channel state is thus a power ratio, an is a scalar number. However, approximations to this exact measure can be used; for example the square of the complex channel response |H|² can be used as this is an approximation of C/N, which is in turn an approximation of C/(N+I), as illustrated below.

In practice the received 64-QAM constellation values do not always fall exactly on the nominal constellation points, but because of noise, distortion and interference, form a cloud of values in the vicinity of each point. As described below, channel state information (CSI) can be measured by determining how much the received values depart, on average, from the nominal positions.

Figure 4 shows the system of our application EP 0 991 239A. The part corresponding on Figure 3 to the channel equaliser 110, through the metric assignment and demapping circuit 112 and the inner deinterleaver 122 to the Viterbi decoder 124 is shown. The metric assignment and demapping circuit 112 is shown in more detail. In the circuit shown in Figure 4, an 11-bit input signal is received at an input 222 from the output of the channel equaliser 110 and is applied to three metric characteristic generating circuits 224a, 224b, and 224c, which are referred to respectively as the bit 1 metric circuit, the bit 2 metric circuit, and the bit 3 metric circuit. The 9-bit output of each circuit 224 is connected to a respective adjustable quantiser 226, which provides a 3-bit soft decision output. The three 3-bit outputs are applied from the metric assignment and demapping circuit 112 via the inner deinterleaver 122 to a multiplexer (MPXR) 228 for the 3-bit soft decisions, which produces two 3-bit outputs to inputs X and Y respectively of the Viterbi decoder 124. The Viterbi decoder 124 provides an output 232.

Thus, before the 3-bit quantisation in the quantisers 226, the input signal received from the channel equaliser 110 is processed in the metric circuits 224 by a set of metric characteristics, which provide a measure of how far and in what sense the signal departs from the decision level for each bit.

The resulting signals are individually quantised in quantisers 226 to produce three-bit soft decisions, that is, a confidence value is associated with each decision. The confidence values are quantised relative to confidence value discrimination levels. After deinterleaving in the inner deinterleaver 122, the soft decisions are then multiplexed in multiplexer 228 appropriately for the convolutional code being used for presentation to the X and Y inputs of the Viterbi decoder 124.

Figure 4 shows a circuit 240 which can be used for channel state measurement. The circuit 240 is also connected to input 222 for receiving the input signal, which comprises time-multiplexed real and imaginary (in-phase and out-of-phase) carrier components for successive OFDM carriers. That is, the real and imaginary components for each carrier are multiplexed, and the resultant multiplexes for the carriers are themselves multiplexed. During any one symbol period all the carriers are processed. The input signal is applied to a 'hard' quantiser 244 and to the non-inverting input of a subtracter 246. The output of the quantiser 244 is connected to the inverting or subtractive input of the subtracter 246. The output of the subtracter is then connected through a rectifier or modulus circuit 248, which inverts negative values, to one input of a two-input AND-gate 250. The other input of the AND-gate 250 receives a flag indicating whether the carrier is a pilot of the DVB-T system, as referred to above, or rather is a data carrier carrying information. Operation is suppressed for the pilot carriers. The output of the AND-gate 250 is applied both directly and through a delay 252 to an adding circuit 254, the output 256 of which forms the output of the channel state measurement circuit. The delay 252 demultiplexes the real and imaginary values for each carrier, and the adder 254 adds the real and imaginary parts of the signal value. The circuit 240 produces an output during a particular time period for each of the carriers the condition of which is to be monitored.

The method used in the equipment shown in circuit 240 to calculate the channel state consists, for each carrier, of first determining in the quantiser 244 the nearest nominal level for each component of the complex input signal, and then subtracting the thus-determined nearest nominal level from the component of the complex input signal itself. This gives a measure of the deviation from the correct value, as introduced by the transmission channel. As noted, at this point the signal for each carrier is carried for convenience as time-multiplexed real and imaginary components. The process of subtracting the nearest nominal level is simplified considerably by arranging that the nominal constellation positions are aligned with transitions of the major bits of the binary-encoded words used to represent the real and imaginary components. The resulting difference signals from the subtracter 246 are rectified in the rectifier 248 to produce positive-going signals, and the contributions of the pilot carriers of the DVB-T system are suppressed by the AND-gate 250, as noted above. The real and imaginary values for each carrier are then demultiplexed by the delay 252 and are added together by the adder 254, to provide an approximation to the error magnitude for that carrier.

While the exact length of the error vector could be measured by evaluating the root-sum-of-squares of the real and imaginary errors, this is unnecessarily accurate and using the sum of the real and imaginary errors provides a useful reduction in complexity.

Figure 4 also shows a symbol-recursive filter 260 for averaging the carrier error values as determined by the circuit 240. The filter 260 is connected to the output of the circuit 240 and receives at an input 262 the measured channel state error values. In the example of the filter 260 shown, these values are applied to a symbol delay filter 264. The measured channel state values are filtered with a recursive low-pass filter incorporating a full symbol period delay 272, a subtracter 266, attenuator 268, and adder 270, so that successive error values from each carrier position are averaged together. The signal is then clipped in circuit 274 to remove any negative values (caused by quantising errors) and to limit the range of positive values, before being passed to the quantiser selection process. Our European Patent Application 0 991 239A describes the detailed construction of this example of the symbol-recursive filter 260 (see Figure 6 of that application).

The channel state information could be used simply to reject unusable carriers. However, performance can be improved by modifying the soft-decision values according to the level of impairment signalled by the channel state measurement. A control law can be developed by a combination of theory and practical optimisation to relate the modified soft decisions to the channel state values.

This is illustrated in Figure 4, which shows a circuit 280 which implements a control law. The circuit 280 has an input 282 for receiving the output of circuit 260 which is applied to a logarithm circuit 284 which takes the logarithm of the input value to base two. The output of the circuit 284 is applied through an inverter 286 to the non-inverting input of a subtracter 288. The inverting input of the subtracter receives a correction signal which is dependent upon the particular type of modulation system being used. The output of the subtracter 288 is multiplied by two in a multiplier 290, the output of which is applied to one input of a two-input adder 292 which also receives an offset adjustment. The output of the adder 292 is applied to a limiter or clipper 294, the output 296 of which constitutes the output of the control law circuit 280.

The circuit 280 operates by first taking the base-two logarithm of the channel state signal in the logarithm circuit 284. Next, the log signal is bit-wise inverted by inverter 286, so that a large value now represents a good-quality signal. A shift is then subtracted in subtracter 288 to take account of the different channel state sensitivities of different modulation systems. This occurs because of the differing spacing between points in the constellation for systems other than 64-QAM. Because of the logarithm, the shift gives the effect of dividing the channel state measurement by a factor. The resulting signal is multiplied by two in multiplier 290 to give the effect of using the square of the channel state measurement. This converts the voltage carrier-to-noise measurement into a power carrier-to-noise measurement. An adjustable offset, optimised empirically by measurement, is then added in adder 292 and the result clipped in clipper 294 to take account of the range of control available for modifying the soft decisions.

The use of the logarithm circuit 284, which, notably, is not followed by any antilogarithm circuit, might be thought to distort the processing, but in fact is found to lead to more efficient processing. The logarithm operation does not need to be conducted with high accuracy; a very low-grade logarithm using only one binary digit for the mantissa can be employed.

The effective discrimination levels for the soft decisions in the Viterbi decoder are altered according to the measured channel state. That is to say, the hard decisions are fixed, and depend solely on which of a plurality of possible values is nearest to the received value. The confidence value associated with any decision and which makes it a soft decision is also quantised, and this quantisation is altered in dependence upon the channel state. The metric circuits 224 make the hard decisions, and the adjustable quantisers 226 do not alter those decisions but quantise and modulate the confidence values. The quantiser levels used to produce the soft decisions are altered in dependence upon the channel state.

The circuit illustrated in Figure 4 thus shows how the circuits 240, 260, 280 are used to provide a system in which the channel state information is used in making the soft decisions in the decoder. The output of the circuit 280 is applied to control the adjustable quantisers 226 which produce respective soft decision outputs. These are then applied to the deinterleaver 122, multiplexer 228, and Viterbi decoder 124.

The quantisers 226 may provide ten different quantising laws selected by the 0 to 9 states of the 4-bit quantiser control signal from circuit 280, with state 9 representing the finest quantiser to be used for the highest quality signals. The quantiser laws are produced approximately at gain steps of √2, so that the upper three bits of the control signal select five levels of bit shift, and clip the signals at the extremes of each range to produce a 5-bit signal. The soft decision value is then produced using the levels 12, 8, 4, 0, -4, -8 and -12 for unity gain values, or levels 9, 6, 3, 0, -3, -6 and -9 to approximate for ¹/_{√2} gain values. Thus for a carrier signal of very low quality, which is either originally small (and therefore noisy) or obscured by interference, the quantisation levels are spread over a wide range so that the standardised signal levels will tend to fall in the 011 and 100 states, indicating low confidence in the values from this carrier to the Viterbi decoder.

In an alternative arrangement (not described in our aforementioned European Patent Application) the quantisers 226 provide fourteen different quantising laws, selected by the 12 to 15 and 0 to 9 states of the control signal 296. State 12 represents the coarsest quantiser to be used for the poorest quality signals, and state 9 represents the finest quantiser to be used for the highest quality signals. In this case the operation of the clipper 294 in the control law circuit 280 is now to clip to the range -4 to 9 in two's complement. Then by discarding the sign bit, the unsigned numbers 12 to 15 and 0 to 9 are successively obtained. There are now seven levels of bit shift.

In the channel state measurement system of Figure 4 it may be said that the measurement is a direct one, that is to say channel state is measured by taking a measure of the distance from the received point to the nearest constellation point, and this is done carrier by carrier after the channel equaliser. This measurement, which may be termed a measurement of the cloud size, will normally give an accurate estimate of the true quality of each carrier of the many-carrier signal.

### Indirect channel state measurement

It is also known that it is possible to provide an estimate of the signal-to-noise ratio for each carrier in a DVB-T system, by determining the strength of so-called scattered pilots distributed amongst the data-carrying carriers produced in the OFDM process. The strength of the individual carriers is then estimated by interpolation in frequency and time amongst the signal-to-noise values obtained for the pilots. This may be regarded as an indirect approach to obtaining a measure of channel state for each of the carriers.

Figure 5 illustrates the structure of a hardware implementation of a channel state measurement system operating in accordance with the indirect method. As with Figure 4, the part of the receiver of Figure 3 corresponding to the channel equaliser, through the metric assignment and demapping circuit 112 and the deinterleaver 122 to the Viterbi decoder 124 is shown. In this case both the channel equaliser 110 and the metric assignment and demapping circuit 112 are shown in more detail. The channel equaliser 110 is similar to that described in European Patent Application EP-A-0 441 731 and United States Patent 5,274,629, see Figure 5 thereof. A practical receiver would also include circuitry for detecting and allowing for frequency-selective interference, but this is not relevant to the present invention and has been omitted for simplicity. Figure 5 is indicated as prior art, in that it represents the detailed implementation of a principle which has previously been proposed, though it is not known that the principle or the implementation have previously been published.

Referring to Figure 5, a signal is received at an input 300 from the OFDM decoder or FFT circuit 108. This signal is applied two ways; to a main signal path comprising a compensating delay 302 and a complex divider 304 to the main input of the metric assignment and demapping circuit 112, and to a side-chain. The side-chain commences with a scattered pilot store 310 which is capable of storing the values of the most recent six symbols' worth of scattered pilots. A temporal interpolator 312 is connected to the output of the scattered pilot store 310, and the scattered pilot values are read out of the store as required for the temporal interpolator.

The temporal interpolator 312 performs linear interpolation between adjacent scattered pilots, which are four symbols apart in time. There are scattered pilots on every third carrier, and therefore the temporal interpolation is done once for every three carriers. It will be appreciated that the temporal interpolation is done for a point in time which is three symbols ago, because this is the most recent time for which all the requisite scattered pilots will have been received. The temporal interpolator 312 receives from the scattered pilot store those two scattered pilots, four symbols apart, which bracket the point being interpolated, or just one scattered pilot when there is a pilot at the point being interpolated. For this reason it is necessary to store six symbols' worth of scattered pilots. The output of the temporal interpolator 312 is thus the interpolated scattered pilot value on every third carrier.

As described in the DVB standard referred to above, the scattered pilots are modulated in the transmitter by a PRBS sequence, which is a series of values, one for each of the transmitted carriers, and are boosted by the factor 4/3. Thus the modulation is defined as +4/3 + j0 on some carriers and -4/3 + j0 on others, depending upon the corresponding bit in the PRBS sequence. In the channel equaliser 110, the output of the temporal equaliser is applied to a reference PRBS removal circuit 314 which removes the modulation. That is, it passes the scattered pilot on unaltered if the transmitted value of the scattered pilot is +4/3 + j0, and negates or inverts the value of the scattered pilot if the transmitted value of the scattered pilot is -4/3 + j0. The output of the reference PRBS remover 314 is thus the interpolated channel frequency response on every third carrier.

The output of the reference PRBS removal circuit 314 is applied to a frequency interpolator 316. The frequency interpolator takes the form of a finite impulse response (FIR) filter implemented as an eight-tap transversal filter. The frequency interpolator operates in the frequency direction and interpolates a value for every carrier.

More accurately, the FIR filter constituting the frequency interpolator 316 is a three-phase filter having a total of 23 taps. The two asymmetrical phases each have eight taps, and the impulse response of one is the reverse of the other. The symmetrical phase has seven taps, six of which are zero. The data is complex, while the tap weights are real.

The data from the reference PRBS remover 314 are shifted through the filter 316 at one step every three carriers, and thus at each step the three phases of the filter 316 are applied to the data in turn. This generates an interpolated channel frequency response for every carrier.

The output of the frequency interpolator 316 thus represents the strength of each of the individual carriers of the OFDM multiplex. If the noise on each channel is the same, the carrier to noise ratio will then be the inverse of the frequency response and will constitute a channel state indicator (CSI) on a carrier by carrier basis.

The values from the frequency interpolator 316 are applied to a denominator input of the complex divider 304 in the main signal path. The value of the signal on each carrier as received from the FFT 108 is applied to the numerator input of the complex divider 304. Thus, the value of the signal on each carrier is divided by the corresponding interpolated channel frequency response value. This equalises the signal, to produce the constellation forms shown in Figure 9 of the standard. These have in fact been multiplied by the normalisation factors given in Table 6 of the standard, and further multiplied by 3/4. These factors are allowed for as will be understood by those familiar with the art.

The compensating delay 302 provides a delay of about three symbols and is included because the most recent point in time for which the interpolation of the channel frequency response can be done is three symbols ago.

The equalised output of the complex divider 304 provides the signal output from the channel equaliser and is applied to the bit metric circuits 224 in the metric assignment and demapping circuit 112. The bit metric circuits 224, quantisers 226, deinterleaver 122, multiplexer 228 and Viterbi decoder are the same as in Figure 4 and are not again described.

As well as being applied to the complex divider 304, the output of the frequency interpolator 316, which forms a so-called indirect measurement of the channel state, is applied to a control law circuit 320. This has an input 322 connected to the output of the frequency interpolator 316. The output of the frequency interpolator is a series of complex values transmitted in a single stream with the real and imaginary parts multiplexed. This is first applied to a rectifier or modulus circuit 323, which inverts negative values, and the output of which is applied both directly and through a delay 324, which co-times the real and imaginary parts, to a circuit 325 which performs the function of taking one-quarter of the smaller of the two inputs and leaving the larger input unchanged. This circuit 325 can be formed of two components, the first of which passes whichever is the greater of the two inputs to a first output and whichever is the smaller to a second output, followed by a circuit which takes one-quarter of the second output. Other implementations are possible. The rectifier 323, the delay 324, the circuit 325, and an adder 326 co-operate to generate an approximate magnitude value for the complex values, which in this instance may be defined as equal to the larger of the two (real and imaginary) components plus one-quarter of the other, smaller component. These magnitude values are then applied to a logarithm circuit 328 which takes the logarithm of the input value to base two. The output of the circuit 328 is applied to a multiplier 330 where it is multiplied by two. The output of the multiplier 330 is applied to one input of a two-input adder 332 which also receives an offset adjustment. The output of the adder 332 is applied to a limiter or clipper 334, the output 336 of which constitutes the output of the control law circuit 320.

The elements 328,330, 332 and 334 of the control law circuit 320 of Figure 5 are similar to the elements 284,290,292 and 294 of the control law circuit 280 of Figure 4.

The circuit 320 operates on the magnitude signal from adder 326 by taking the base-two logarithm of the channel state signal in the logarithm circuit 328. The resulting signal is multiplied by two in multiplier 330 to give the effect of using the square of the channel state measurement. This converts the voltage measurement into a power measurement. An adjustable offset, optimised empirically by measurement, is then added in adder 332, and the result clipped in clipper 334 to take account of the range of control which is available for modifying the discrimination levels for the soft decisions in the quantisers 226.

In the indirect path the square of the channel response |H|² can be used as an adequate measure of channel state, in so far as it is an approximation of C/N, which is in turn an approximation of C/(N+I), this being the strict measure of channel state.

### Preferred Embodiment of Channel State Measurement

As noted above, the direct measurement of channel state as illustrated in Figure 4 generally gives improved results. However, we have found that there is one special circumstance where the improvement is not forthcoming, namely where there is both movement and 0dB echoes. The preferred embodiment of the invention, described in Figure 6, overcomes this problem.

Figure 6 again shows the part of a DVB-T receiver corresponding on Figure 3 to the channel equaliser 110, the metric assignment and demapping circuit 112, the inner deinterleaver 122, and the Viterbi decoder 124.

The channel equaliser 110 has an input 300 connected to the FFT circuit 108 and contains a compensating delay 302 and a complex divider 304 in the main signal path, and a scattered pilot store 310, temporal interpolator 312, reference PRBS removal circuit 314, and frequency interpolator 316. The output of the frequency interpolator 316 is applied to the denominator input of the complex divider 304. The channel equaliser is thus the same as the channel equaliser 110 of Figure 5 and is thus not further described in detail. It will be recalled that the output of the frequency interpolator 316 can be used as a measure of channel state, and is derived by interpolating the strengths of the scattered pilot carriers in the transmission multiplex.

The metric assignment and demapping circuit 112 has a main signal input 222 connected to the output of the complex divider 304 in the channel equaliser, and includes three bit metric circuits 224a, 224b and 224c, and three adjustable quantiser circuits 226a, 226b and 226c connected respectively to the bit metric circuits. The quantiser circuits are connected through the inner deinterleaver 122 and a multiplexer 228 for the 3-bit soft decisions to a Viterbi decoder. These elements are all the same as shown in Figure 4, and are not further described in detail.

The quantisers 226a, 226b and 226c all receive a control signal which adjusts the amplitudes of the discrimination levels in the quantisers relative to the received values, and thus changes the confidence level discrimination levels in dependence upon channel state.

The metric assignment and demapping circuit 112 generates the control signal for the quantisers 226 as follows. The circuit 112 includes a direct channel state determining section and an indirect channel state determining section. The direct channel state determining section comprises a direct channel state determining circuit 240 connected to the input 222, a symbol recursive filter 260 connected to the circuit 240, and a control law circuit 280 connected to the filter 260. These are the same as the correspondingly-numbered elements in Figure 4 and are not therefore described again in detail. The construction of the filter 260 is not shown in Figure 6 but may be seen from Figure 4. The direct channel state determining section operates by comparing in the subtracter 246 the input values with hard quantised values obtained from the hard quantiser 244.

The indirect channel state determining section comprises a control law circuit 320 connected to the output of the frequency interpolator 316 to receive the frequency response of the scattered pilots in the input signal. The control law circuit is identical to the control law circuit 320 of Figure 5.

In the embodiment of Figure 6, the output 346 of the direct-measurement control law circuit 280 and the output 348 of the indirect-measurement control law circuit 320 are both applied to a comparison circuit 350. The comparison circuit 350 is a selection which selects the output 346,348 which represents the worse or poorer channel state, and thus the comparison circuit is identified on Figure 6 by a "less than" sign. The circuit 350 thus applies a non-linear function. The selected signal 346,348 is then applied to a limiter or clipper 352 corresponding to the limiter or clipper 294 of Figure 4 and to the limiter or clipper 334 of Figure 5 to provide a control output signal 354 which is applied to the control inputs of the quantisers 226.

With this arrangement, for interference and for nulls in the signal input where there is no movement or only slow movement, the output 346 from the direct channel state determining section will be used. However, for quickly-moving nulls, which are lost in the filtering of the direct measurement, the output 348 from the indirect channel state determining section will be used.

In this way improved channel state measurement can be obtained.

Although described in the context of DVB-T, the invention may be applicable to other many-carrier transmission systems.

While one example of the invention has been described, it will be appreciated that many variations may be made in the implementation of the invention. In particular, while the invention has been described in terms of hardware elements, these may, in practice, be implemented at least in part in software. When this is done Figure 6 should be regarded as a flow chart indicating the software operation.

## Claims

1. Apparatus for determining values encoded by a received signal, the values being selected from a plurality of possible values, the apparatus comprising:
an input (300) for receiving a signal representing a sequence of values;
adjustable soft-decision quantising means (224,226) coupled to the input for comparing the received values with a plurality of discrimination levels to determine at any moment the values from the plurality of possible values which are nearest to the values indicated by the received signal and for providing confidence values related thereto, the determination of the confidence values being adjustable in response to a control signal; and
channel state determining means (112) coupled to the input for generating from the received signal a measure of channel condition;
in which the channel state determining means comprises a direct channel state determining section (240,260,280), a separate indirect channel state determining section (110,320), and a selector (350); the direct channel state determining section operating by comparing the input values with hard quantised values obtained from the input values, the indirect channel state determining section operating by determining channel state from the frequency response of a plurality of reference values in the input signal, and the control signal being generated by the selector from the outputs of the direct and indirect channel state determining sections by selecting the output of whichever of the direct and indirect channel state determining sections indicates the worse channel state condition.

2. Apparatus according to claim 1, in which the indirect channel state determining section comprises a channel equaliser (110) followed by a control law circuit (320).

3. Apparatus according to claim 1, in which the direct channel state determining section includes means (240) for measuring the distance between a received amplitude/phase position and the nearest of a plurality of possible amplitude/phase positions.

4. Apparatus for determining channel state information from an OFDM signal received over a channel, the signal representing phase/amplitude points selected from a constellation of possible phase/amplitude points, the apparatus comprising:
an input (300) for receiving an OFDM signal transmitted over a channel, the OFDM signal consisting of many carriers comprising data carriers representing a sequence of phase/amplitude points in successive symbol periods, and reference carriers interleaved among the data carriers;
a channel equaliser (110) coupled to the input for determining from the received reference carriers the frequency response of the transmission channel, and equalising the input signal in response thereto;
a direct channel state determining section (240,260,280) coupled to receive the input signal after equalisation in the channel equaliser and including:
quantising means (244) coupled to the output (222) of the channel equaliser for determining at any moment the phase/amplitude points from a plurality of possible phase/amplitude points which are nearest to each of the points represented by each carrier in each symbol period; and
differencing means (246,248) coupled to the output of the channel equaliser and to the quantising means for determining the modulus of the differences between the points represented by each carrier in each symbol period and the corresponding nearest points of the plurality of possible phase/amplitude points;
an indirect channel state determining section (310-320) separate from the direct channel state determining section for determining the frequency response of the transmission channel, and for determining therefrom a measure of channel state; and
means (350) coupled to the direct and indirect channel state determining sections for providing an output channel state indication derived from whichever of the direct and indirect channel state determining sections indicates the worse channel state condition.

5. Apparatus according to claim 4, in which the direct channel state determining section further comprises accumulating means (260) coupled to the differencing means for accumulating the differences for each carrier to provide an output indicating channel state for each of the many carriers.

6. Apparatus according to claim 5, in which the accumulating means includes a symbol recursive filter (260).

7. Apparatus according to claim 4, in which the indirect channel state determining section comprises a channel equaliser (110) followed by a control law circuit (320).

8. A method of determining values encoded by a received signal, the values being selected from a plurality of possible values, the method comprising the steps of:
receiving a signal representing a sequence of values;
comparing the received values with a plurality of discrimination levels to determine at any moment the values from the plurality of possible values which are nearest to the values indicated by the received signal and to provide confidence values related thereto, the determination of the confidence values being adjustable in response to a control signal; and
generating from the received signal a measure of channel condition;
in which step of generating from the received signal a measure of channel condition the channel state determining means comprises a direct channel state determination and a separate indirect channel state determination, the direct channel state determination operating by comparing the input values with hard quantised values obtained from the input values, and the indirect channel state determination operating by determining channel state from the frequency response of a plurality of reference values in the input signal, the control signal being generated from the direct and indirect channel state determinations by selecting the output of whichever of the direct and indirect channel state determinations indicates the worse channel state condition.

9. A method according to claim 8, in which the indirect channel state determination comprises channel equalisation followed by control law operation.

10. A method according to claim 8, in which the direct channel state determination measures the distance between a received amplitude/phase position and the nearest of a plurality of possible amplitude/phase positions.

11. A method of determining channel state information from an OFDM signal received over a channel, the signal representing phase/amplitude points selected from a constellation of possible phase/amplitude points, the method comprising the steps of:
receiving an OFDM signal transmitted over a channel, the OFDM signal consisting of many carriers comprising data carriers representing a sequence of phase/amplitude points in successive symbol periods, and reference carriers interleaved among the data carriers;
determining from the received reference carriers the frequency response of the transmission channel, and equalising the input signal in response thereto;
direct channel state determination receiving the equalised input signal and including:
determining at any moment the phase/amplitude points from a plurality of possible phase/amplitude points which are nearest to each of the points represented by each carrier in each symbol period; and
determining the modulus of the differences between the points represented by each carrier in each symbol period and the corresponding nearest points of the plurality of possible phase/amplitude points;
indirect channel state determination separate from the direct channel state determination to determine the frequency response of the transmission channel, and for determining therefrom a measure of channel state; and
providing an output channel state indication derived from whichever of the direct and indirect channel state determinations indicates the worse channel state condition.

12. A method according to claim 11, in which the direct channel state determination further comprises accumulating the differences for each carrier to provide an output indicating channel state for each of the many carriers.

## Patentansprüche

1. Vorrichtung zum Ermitteln von Werten, die von einem empfangenen Signal codiert wurden, wobei die Werte aus einer Mehrzahl von möglichen Werten ausgewählt werden,
wobei die Vorrichtung Folgendes umfasst:
einen Eingang (300) zum Empfangen eines eine Folge von Werten repräsentierenden Signals;
mit dem Eingang gekoppelte einstellbare Softentscheidungs-Quantisierungsmittel (224, 226) zum Vergleichen der empfangenen Werte mit mehreren Auflösungsebenen, um in jedem Augenblick die Werte aus der Mehrzahl von möglichen Werten zu ermitteln, die den von dem empfangenen Signal angezeigten Werten am nächsten liegen, und um Konfidenzwerte in Bezug darauf zu erzeugen, wobei die Ermittlung der Konfidenzwerte als Reaktion auf ein Steuersignal einstellbar ist; und
ein Kanalzustandsermittlungsmittel (112), das zum Erzeugen eines Maßes des Kanalzustands von dem empfangenen Signal mit dem Eingang gekoppelt sind;
wobei das Kanalzustandsermittlungsmittel einen direkten Kanalzustandsermittlungsteil (240, 260, 280), einen separaten indirekten Kanalzustandsermittlungsteil (110, 320) und einen Selektor (350) umfasst; wobei der direkte Kanalzustandsermittlungsteil durch Vergleichen der Eingangswerte mit von den Eingangswerten erhaltenen harten quantisierten Werten arbeitet, wobei der indirekte Kanalzustandsermittlungsteil durch Ermitteln des Kanalzustands von der Frequenz-Response einer Mehrzahl von Referenzwerten im Eingangssignal arbeitet, und wobei das Steuersignal vom Selektor von den Ausgängen des direkten und des indirekten Kanalzustandsermittlungsteils durch Wählen desjenigen Ausgangs erzeugt wird, von dem der direkte und der indirekte Kanalzustandsermittlungsteil den schlechteren Kanalzustand anzeigt.

2. Vorrichtung nach Anspruch 1, bei der der indirekte Kanalzustandsermittlungsteil einen Kanalentzerrer (110) gefolgt von einer Steuergesetzschaltung (320) umfasst.

3. Vorrichtung nach Anspruch 1, bei der der direkte Kanalzustandsermittlungsteil ein Mittel (240) zum Messen der Distanz zwischen einer empfangenen Amplituden/Phasen-Position und der nächstliegenden aus einer Mehrzahl von möglichen Amplituden/Phasen-Positionen beinhaltet.

4. Vorrichtung zum Ermitteln von Kanalzustandsinformationen von einem über einen Kanal empfangenen OFDM-Signal, wobei das Signal aus einer Konstellation von möglichen Phasen/Amplituden-Punkten ausgewählte Phasen/Amplituden-Punkte repräsentiert, wobei die Vorrichtung Folgendes umfasst:
einen Eingang (300) zum Empfangen eines über einen Kanal gesendeten OFDM-Signals, wobei das OFDM-Signal aus vielen Trägern besteht, die Datenträger, die eine Folge von Phasen/Amplituden-Punkten in aufeinander folgenden Symbolperioden repräsentieren, und unter den Datenträgern verschachtelte Referenzträger umfassen;
einen mit dem Eingang gekoppelten Kanalentzerrer (110), um von den empfangenen Referenzträgern die Frequenz-Response des Sendekanals zu ermitteln und das Eingangssignal als Reaktion darauf zu entzerren;
einen direkten Kanalzustandsermittlungsteil (240, 260, 280) zum Empfangen des Eingangssignals nach dem Entzerren im Kanalentzerrer, der Folgendes umfasst:
ein Quantisierungsmittel (244), das mit dem Ausgang (222) des Kanalentzerrers gekoppelt sind, um in jedem Augenblick die Phasen/Amplituden-Punkte aus einer Mehrzahl von möglichen Phasen/Amplituden-Punkten zu ermitteln, die jedem der durch jeden Träger in jeder Symbolperiode repräsentierten Punkte am nächsten liegen; und
ein Differenzierungsmittel (246, 248), das mit dem Ausgang des Kanalentzerrers und dem Quantisierungsmittel gekoppelt ist, um das Modul der Differenzen zwischen den durch jeden Träger in jeder Symbolperiode repräsentierten Punkten und den entsprechenden nächstliegenden Punkten aus der Mehrzahl von möglichen Phasen/Amplituden-Punkten zu ermitteln;
einen indirekten Kanalzustandsermittlungsteil (310-320), separat vom direkten Kanalzustandsübermittlungsteil, um die Frequenz-Response des Sendekanals und davon ein Maß für den Kanalzustand zu ermitteln; und
ein Mittel (350), das mit dem direkten und dem indirekten Kanalzustandsermittlungsteil gekoppelt ist, um eine Ausgangskanalzustandsanzeige zu geben, die von demjenigen aus dem direkten und dem indirekten Kanalzustandsermittlungsteil abgeleitet ist, der den schlechteren Kanalzustand anzeigt.

5. Vorrichtung nach Anspruch 4, bei der der direkte Kanalzustandsermittlungsteil ferner ein Akkumulierungsmittel (260) umfasst, das mit dem Differenzierungsmittel zum Akkumulieren der Differenzen für jeden Träger gekoppelt ist, um einen den Kanalzustand anzeigenden Ausgang für jeden der vielen Träger zu geben.

6. Vorrichtung nach Anspruch 5, bei der das Akkumulierungsmittel ein Symbolrekursivfilter (260) aufweist.

7. Vorrichtung nach Anspruch 4, bei der der indirekte Kanalzustandsermittlungsteil einen Kanalentzerrer (110), gefolgt von einer Steuergesetzschaltung (320) umfasst.

8. Verfahren zum Ermitteln von durch ein empfangenes Signal codierten Werten, wobei die Werte aus einer Mehrzahl von möglichen Werten ausgewählt werden, wobei das Verfahren die folgenden Schritte beinhaltet:
Empfangen eines eine Folge von Werten repräsentierenden Signals;
Vergleichen der empfangenen Werte mit einer Mehrzahl von Auflösungsebenen, um in jedem Augenblick die Werte aus einer Mehrzahl von möglichen Werten zu ermitteln, die den von dem empfangenen Signal angezeigten Werten am nächsten liegen, und um Konfidenzwerte in Bezug darauf zu erzeugen, wobei die Ermittlung der Konfidenzwerte als Reaktion auf ein Steuersignal einstellbar ist; und
Erzeugen eines Maßes für den Kanalzustand von dem empfangenen Signal;
wobei in dem Schritt des Erzeugens eines Maßes für den Kanalzustand von dem empfangenen Signal das Kanalzustandsermittlungsmittel eine direkte Kanalzustandsermittlung und eine separate indirekte Kanalzustandsermittlung beinhaltet, wobei die direkte Kanalzustandsermittlung durch Vergleichen der Eingangswerte mit von den Eingangswerten erhaltenen harten quantisierten Werten funktioniert und die indirekte Kanalzustandsermittlung durch Ermitteln eines Kanalzustands von der Frequenz-Response einer Mehrzahl von Referenzwerten in dem Eingangssignal funktioniert, wobei das Steuersignal von den direkten und indirekten Kanalzustandsermittlungen durch Auswählen desjenigen Ausgangs erzeugt wird, von dem die direkte und die indirekte Kanalzustandsermittlung den schlechteren Kanalzustand anzeigt.

9. Verfahren nach Anspruch 8, bei dem die indirekte Kanalzustandsermittlung eine Kanalentzerrung gefolgt von einer Steuergesetzoperation beinhaltet.

10. Verfahren nach Anspruch 8, bei dem die direkte Kanalzustandsermittlung die Distanz zwischen einer empfangenen Amplituden/Phasen-Position und der nächstliegenden aus einer Mehrzahl von möglichen Amplituden/Phasen-Positionen misst.

11. Verfahren zum Ermitteln von Kanalzustandsinformationen von einem über einen Kanal empfangenen OFDM-Signal, wobei das Signal von einer Konstellation von möglichen Phasen/Amplituden-Punkten ausgewählte Phasen/Amplituden-Punkte repräsentiert, wobei das Verfahren die folgenden Schritte beinhaltet:
Empfangen eines über einen Kanal übertragenen OFDM-Signals, wobei das OFDM-Signal aus vielen Trägern besteht, die Datenträger, die eine Folge von Phasen/Amplituden-Punkten in aufeinander folgenden Symbolperioden repräsentieren, und unter den Datenträgern verschachtelte Referenzträger umfassen;
Ermitteln der Frequenz-Response des Übertragungskanals anhand der empfangenen Referenzträger und Entzerren des Eingangssignals als Reaktion darauf;
wobei die direkte Kanalzustandsermittlung das entzerrte Eingangssignal empfängt und Folgendes beinhaltet:
Ermitteln, in jedem Augenblick, der Phasen/Amplituden-Punkte aus mehreren möglichen Phasen/Amplituden-Punkten, die jedem der von jedem Träger in jeder Symbolperiode repräsentierten Punkte am nächsten liegen; und
Ermitteln des Moduls der Differenzen zwischen den durch jeden Träger in jeder Symbolperiode repräsentierten Punkten und den entsprechenden nächstliegenden Punkten der Mehrzahl von möglichen Phasen/Amplituden-Punkten;
eine indirekte Kanalzustandsermittlung separat von der direkten Kanalzustandsermittlung, um die Frequenz-Response des Übertragungskanals und davon ein Maß für den Kanalzustand zu ermitteln; und
Geben einer Ausgangskanalzustandsanzeige, die von derjenigen aus der direkten und indirekten Kanalzustandsermittlung abgeleitet ist, die den schlechteren Kanalzustand anzeigt.

12. Verfahren nach Anspruch 11, bei dem die direkte Kanalzustandsermittlung das Akkumulieren der Differenzen für jeden Träger zum Bereitstellen eines einen Kanalzustand anzeigenden Ausgangs für jeden der vielen Träger umfasst.

## Revendications

1. Appareil pour déterminer des valeurs codées par un signal reçu, les valeurs étant sélectionnées parmi une pluralité de valeurs possibles, l'appareil comprenant :
une entrée (300) pour recevoir un signal représentant une séquence de valeurs;
un moyen ajustable de quantification à décision douce (224, 226) couplé à l'entrée pour comparer les valeurs reçues à une pluralité de niveaux de discrimination pour déterminer à un moment quelconque les valeurs, parmi une pluralité de valeurs possibles, qui sont les plus proches des valeurs indiquées par le signal reçu et pour fournir des valeurs de confiance associées à celles-ci, la détermination des valeurs de confiance étant ajustable en réponse à un signal de commande; et
un moyen de détermination d'état de canal (112) couplé à l'entrée afin de générer une mesure de condition de canal à partir du signal reçu;
dans lequel le moyen de détermination d'état de canal comprend une section de détermination directe d'état de canal (240, 260, 280), une section séparée de détermination indirecte d'état de canal (110, 320) et un sélecteur (350); la section de détermination directe d'état de canal fonctionnant en comparant les valeurs d'entrée à des valeurs à quantification ferme obtenues à partir des valeurs d'entrée, la section de détermination indirecte d'état de canal fonctionnant en déterminant l'état de canal à partir de la réponse de fréquence d'une pluralité de valeurs de référence dans le signal d'entrée, et le signal de commande étant généré par le sélecteur à partir des sorties des sections de détermination directe et indirecte d'état de canal, en sélectionnant la sortie de celle des sections de détermination directe et indirecte d'état de canal qui indique la pire condition d'état de canal.

2. Appareil selon la revendication 1, dans lequel la section de détermination indirecte d'état de canal comprend un égaliseur de canal (110) suivi par un circuit de loi de commande (320).

3. Appareil selon la revendication 1, dans lequel la section de détermination directe d'état de canal comprend un moyen (240) pour mesurer la distance entre une position d'amplitude/phase reçue et la plus proche d'une pluralité de positions d'amplitude/phase possibles.

4. Appareil pour déterminer des informations d'état de canal à partir d'un signal OFDM reçu sur un canal, le signal représentant des points de phase/amplitude sélectionnés parmi une constellation de points de phase/amplitude possibles, l'appareil comprenant :
une entrée (300) pour recevoir un signal OFDM transmis sur un canal, le signal OFDM consistant en de nombreuses porteuses comprenant des porteuses de données représentant une séquence de points de phase/amplitude dans des périodes symboles successives, et des porteuses de référence entrelacées parmi les porteuses de données
un égaliseur de canal (110) couplé à l'entrée pour déterminer la réponse de fréquence du canal de transmission à partir des porteuses de référence reçues, et égaliser le signal d'entrée en réponse à celle-ci;
une section de détermination directe d'état de canal (240, 260, 280) couplée pour recevoir le signal d'entrée après l'égalisation dans l'égaliseur de canal et comprenant :
un moyen de quantification (244) couplé à la sortie (222) de l'égaliseur de canal pour déterminer à un moment quelconque les points de phase/amplitude, parmi une pluralité de points de phase/amplitude possibles, qui sont les plus proches des points représentés par chaque porteuse dans chaque période symbole; et
un moyen de différenciation (246, 248) couplé à la sortie de l'égaliseur de canal et au moyen de quantification, pour déterminer le module des différences entre les points représentés par chaque porteuse dans chaque période symbole et les points correspondants les plus proches de la pluralité de points de phase/amplitude possibles;
une section de détermination indirecte d'état de canal (310-320) séparée de la section de détermination directe d'état de canal, pour déterminer les réponses de fréquence du canal de transmission et pour déterminer à partir de là, une mesure de l'état de canal; et
un moyen (350) couplé aux sections de détermination directe et indirecte d'état de canal, pour fournir une indication de sortie d'état de canal dérivée de celle des sections de détermination directe et indirecte d'état de canal qui indique la pire condition d'état de canal.

5. Appareil selon la revendication 4, dans lequel la section de détermination directe d'état de canal comprend en outre un moyen d'accumulation (260) couplé au moyen de différenciation, pour accumuler les différences pour chaque porteuse afin de fournir une sortie indiquant un état de canal pour chacune des nombreuses porteuses.

6. Appareil selon la revendication 5, dans lequel le moyen d'accumulation comprend un filtre récursif de symboles (260).

7. Appareil selon la revendication 4, dans lequel la section de détermination indirecte d'état de canal comprend un égaliseur de canal (110) suivi par un circuit de loi de commande (320).

8. Méthode pour déterminer des valeurs codées par un signal reçu, les valeurs étant sélectionnées parmi une pluralité de valeurs possibles, la méthode comprenant les étapes consistant à :
recevoir un signal représentant une séquence de valeurs;
comparer les valeurs reçues à une pluralité de niveaux de discrimination afin de déterminer à un moment quelconque les valeurs, parmi une pluralité de valeurs possibles, qui sont les plus proches des valeurs indiquées par le signal reçu et fournir des valeurs de confiance associées à celles-ci, la détermination des valeurs de confiance étant ajustable en réponse à un signal de commande; et
générer une mesure de condition de canal à partir du signal reçu;
où à l'étape de génération d'une mesure de condition de canal à partir du signal reçu, le moyen de détermination d'état de canal comprend une détermination directe d'état de canal et une détermination séparée indirecte d'état de canal, la détermination directe d'état de canal fonctionnant en comparant les valeurs d'entrée à des valeurs à quantification ferme obtenues d'après les valeurs d'entrée, et la détermination indirecte d'état de canal fonctionnant en déterminant l'état de canal à partir de la réponse de fréquence d'une pluralité de valeurs de référence dans le signal d'entrée, le signal de commande étant généré à partir des déterminations directe et indirecte d'état de canal en sélectionnant la sortie de celle des déterminations directe et indirecte d'état de canal qui indique la pire condition d'état de canal.

9. Méthode selon la revendication 8, dans laquelle la détermination indirecte d'état de canal comprend une égalisation de canal suivie par une opération de loi de commande.

10. Méthode selon la revendication 8, dans laquelle la détermination directe d'état de canal mesure la distance entre une position d'amplitude/phase reçue et la plus proche d'une pluralité de positions d'amplitude/phase possibles.

11. Méthode de détermination d'informations d'état de canal à partir d'un signal OFDM reçu sur un canal, le signal représentant des points de phase/amplitude sélectionnés parmi une constellation de points de phase/amplitude possibles, la méthode comprenant les étapes consistant à :
recevoir un signal OFDM transmis sur un canal, le signal OFDM consistant en de nombreuses porteuses comprenant des porteuses de données représentant une séquence de points de phase/amplitude dans des périodes symboles successives, et des porteuses de référence entrelacées parmi les porteuses de données;
déterminer la réponse de fréquence du canal de transmission à partir des porteuses de référence reçues, et égaliser le signal d'entrée en réponse à celle-ci;
la détermination directe d'état de canal recevant le signal d'entrée égalisé et comprenant :
déterminer à un moment quelconque les points de phase/amplitude, parmi une pluralité de points de phase/amplitude possibles, qui sont les plus proches de chacun des points représentés par chaque porteuse dans chaque période symbole; et
déterminer le module des différences entre les points représentés par chaque porteuse dans chaque période symbole et les points correspondants les plus proches de la pluralité de points de phase/amplitude possibles;
la détermination indirecte d'état de canal séparée de la détermination directe d'état de canal, pour déterminer la réponse de fréquence du canal de transmission et pour déterminer une mesure d'état de canal à partir de là; et
fournir une indication de sortie d'état de canal dérivée de celle des déterminations directe et indirecte d'état de canal qui indique la pire condition d'état de canal.

12. Méthode selon la revendication 11, dans laquelle la détermination directe d'état de canal comprend en outre accumuler les différences pour chaque porteuse afin de fournir une sortie indiquant un état de canal pour chacune des nombreuses porteuses.
